# EUROPEAN PATENT APPLICATION

(11) **EP 4 541 549 A1**
(43) Date of publication of application: **23.04.2025**
(21) Application number: 24207733.7
(22) Date of filing: 21.10.2024
(51) Int. Cl.: B29C 45/26, B29C 45/27, E03C 1/04

(54) **PRODUCTION METHOD FOR A SANITARY FITTING**

(30) Priority: 20.10.2023 DE 102023128949
(71) Applicant: ORAS OY, 26100 Rauma (FI)
(72) Inventor: Voltti, Gaius, 20660 Kaarina (FI)
(74) Representative: Ostertag & Partner Patentanwälte mbB

(57) **Abstract**

A production method for a sanitary fitting (10) including the following steps: Providing a moulding die (50) for injection moulding of the sanitary fitting (10) which defines a mould cavity (54); Arranging a die insert (30), which is configured to be lost within the sanitary fitting (10), in the mould cavity (54); Arranging at least one support insert (56; 58) to support the die insert (30) within the mould cavity (54); Providing an injection channel (40, 60) which traverses the die insert (30) such that it reaches the mould cavity (54) on the other side of the die insert (30) with respect to the at least one support insert (56; 58) at an injection point (40) Injecting mould (70) through the injection channel (60) and out of the injection point (40) into the mould cavity (54) behind the die insert (30).

## Description

### BACKGROUND OF THE INVENTION

### 1. Field of the Invention

The invention concerns a production method for a sanitary fitting and a sanitary fitting produces according to this method.

### 2. Description of the Prior Art

In the past, most housings of sanitary fittings have been produced via brass casting. More modern sanitary fitting housings are made by injection moulding of plastics materials which are then chrome-plated on the outside. Such sanitary fitting housings have several advantages compared to brass casted sanitary fitting housings. For example, such sanitary fitting housings have a lower temperature conductivity and therefore parts of the sanitary fitting housing which conduct hot water do not transfer the heat as much as the brass casted sanitary fitting housing. The risk to scald oneself is reduced with such sanitary fittings.

In the following the terms housing or sanitary fitting housing refer to the housing of a sanitary fitting. However, to shorten the wording also the term sanitary fitting is used synonymous to these terms, because it is clear for the person skilled in the art that other parts like a valve cartridge, sealings or handles have to be added to complete the sanitary fittings after the production of the housing.

In order to produce sanitary fittings made of plastics materials a so-called moulding die (or moulding form) is used which defines a complementary shape of the sanitary fitting shape, the mould cavity. Then liquified plastics material is injected with high pressure into the mould cavity and after solidification the sanitary fitting is released from the moulding die.

Because sanitary fittings always need inner water pathways, e.g. from a base portion to a spout, the moulding die for the production of sanitary fittings comprises so-called die inserts which define the inner shape of the sanitary fitting. Because of geometrical reasons the die inserts are usually removable, e.g. retractable, from the inside of the sanitary fitting during the release of the sanitary fitting from the moulding die.

In the state of the art, usually two die inserts are used to produce a sanitary fitting. One is entering from the spout outlet towards the base portion. The other is entering from the base of the sanitary fitting. These two die inserts then contact each other in the inside of the sanitary fitting to provide a clearance from the base, where the sanitary fitting is connected to the water lines, to the spout outlet, where the water is finally released.

Because the die inserts may not touch the inner walls of the surrounding moulding dies to keep the mould cavity clear, the two die inserts have to stabilize each other. This is usually done by directing the two die inserts towards each other under an acute angle, usually in the range of 40° to 70°. When the mould is then injected under high pressures in range of approximately between 100 bar to 2000 bar, in particular between approx. 400 bar and 800 bar, into the moulding die, the retractable die inserts stabilize each other enough to keep the desired inside geometry of the sanitary fitting.

Although, this production method has proven successful, the requirement for stabilization of the die inserts limits the design freedom for such sanitary fittings.

### SUMMARY OF THE INVENTION

It is therefore an object of the present invention to provide a production method for a sanitary fitting which allows more or other design freedom. In particular, it is an object of the present invention to provide a production method for a sanitary fitting wherein the positioning of the spout of the sanitary fitting relative to the base portion can be more freely decided.

This object of the invention is achieved with a production method for a sanitary fitting including the following steps:
a) Providing a moulding die for injection moulding of the sanitary fitting which defines a mould cavity;
b) Arranging a die insert, which is configured to be lost within the sanitary fitting, in the mould cavity;
c) Arranging at least one support insert to support the die insert within the mould cavity;
d) Providing an injection point on the other side of the die insert with respect to the at least one support insert;
e) Injecting mould at the injection point such that the die insert is stabilized within the mould cavity between the at least one support insert and the injected mould by the pressure force of the injected mould.

The inventors have realized that one may provide more design freedom for a sanitary fitting if one breaks away from the tradition of having retractable pin inserts which interlock with each other, and which are then retracted from the moulding die. Instead, a die insert is used which is configured to be lost in the sanitary fitting. This means that the die insert or at least parts of the die insert will stay in the sanitary fitting even after the injection moulding is finished.

Generally, the die insert has to be spaced apart from other moulding die components defining the outer surface of the sanitary fitting such that in between the die insert and the other components the mould cavity for the sanitary fitting is defined.

However, it is not trivial to keep the die insert in place without penetrating the mould cavity. First, at least one support insert is used which supports the die insert. Furthermore, the inventors have realized that by injecting the mould behind the die insert compared to the support insert, the die insert can be kept in place despite the high pressures needed for plastic material injection moulding.

Otherwise stated, the lost die insert is only supported from one side via the at least one support insert. The mould cavity is free from any other support element on the side of the lost die insert, where the injection point is located. Therefore, the mould cavity is only penetrated from the side of the at least one support insert. Solely the pressure of the mould is used to stabilize the lost die insert against the at least one support insert.

In other words, the inventors have realized that the moulding pressure used to fill the mould cavity can be used to provide stabilization of the die insert. For example, the die insert may be supported on a support insert within the mould cavity. Compared to the support insert, the injection point, where the mould is injected into the mould cavity, is then arranged on the other side of the die insert, e.g. coming from an outer injection channel in the moulding die. When the mould is injected at the injection point, the pressure of the mould presses the die insert towards the support insert and thereby stabilizes its position within the mould cavity. After the moulding process, the injection spot mark or gating point ("Anspritzpunkt"), where the mould has entered the mould cavity, can be hidden under an emblem or the like.

In one embodiment, for providing the injection point an injection channel is provided which traverses the die insert such that it reaches the mould cavity on the other side of the die insert with respect to the at least one support insert at an injection opening arranged at the die insert and the mould is injected through the injection channel and out of the injection opening into the mould cavity behind the die insert.

Because the chrome-plating of sanitary fittings needs a perfectly smooth surface, the mould cavity usually is filled from the base portion of the sanitary fitting. Thereby, the injection spot mark or gating point, will either be positioned on the bottom surface of the base portion or on the inside of the base portion near the bottom surface of the final sanitary fitting. The outside surface of the sanitary fitting is then kept perfectly smooth.

By filling the mould cavity via an injection channel which traverses the die insert, the outer surface of the sanitary fitting can be provided smooth, namely without an injection spot mark or gating point. Furthermore, the filling via an injection channel which traverses the die insert still allows to stabilize the die insert.

By thoroughly choosing the position of the injection opening, the injection pressure of the mould, which acts on the die insert, stabilizes the position of the die insert within the moulding die. In other words, the die insert is back-injected with the mould to stabilize the die insert.

Because the injection opening is positioned somewhere on the outside wall of the die insert, the injection spot mark is still not visible on the outside surface of the sanitary fitting. Thereby this new production method for sanitary fittings does not negatively affect the chrome-plating.

Consequently, the production method according to the invention allows other designs of sanitary fittings. In particular, the acute angle between the spout and the base portion is not necessarily needed any more.

In an embodiment, the production method according any of the preceding claims, wherein the die insert is a water channel insert comprising at least one water channel.

The water channel insert allows to direct water from the base portion of the sanitary fitting, where the valve components are located, towards the spout opening.

In an embodiment, the water channel insert may comprise two parts, in particular a base part and a cover part, and wherein the water channel insert is produced in an over-moulding step by over-moulding one of the parts with the other part.

In an embodiment, during the over-moulding step the water channel may be kept free of mould using a water channel pin and a resulting opening to an outside of the water channel insert may be closed with a plug.

This allows to provide a closed water channel which extends through the water channel insert.

In an embodiment, the at least one support insert may comprise a base pin insert which is arranged inside a base portion of the sanitary fitting.

As most sanitary fittings are supplied with water connection lines from the base portion, the moulding die preferably comprises a base pin insert which provides free space inside the base portion. This space can be used for valve components. Although, one may imagine a base pin insert which is separate from a support insert, it is convenient to provide both functions, namely the support of the water channel insert and the definition of the inner space of the base portion, in one pin insert.

In an embodiment, the at least one support insert may comprise a spout pin insert which is arranged inside a spout portion of the sanitary fitting.

The spout pin insert provides a spout opening at the distal end of the spout portion of the sanitary fitting. Again, the spout pin insert may be additionally used to support the water channel insert.

In an embodiment, at least part of the injection channel may extend through the at least one support insert.

Even though one may provide the injection channel in an additional moulding die component, it is advantageous to use one of the support inserts for the injection channel. This allows to reduce the number of individual parts of the moulding die. As the base portion is usually wider than the spout portion, it is preferable to provide the injection channel in the base pin insert.

In an embodiment, the mould is a plastics material.

The present invention is particularly suited for plastic injection moulding, because injection pressures are higher than in usual brass casting. Furthermore, brass casting allows to use so-called sand cores in the moulding die which will later be opened to provide inner hollow spaces. This is not possible with plastic injection molding and therefore the present invention is particularly relevant for plastic injection moulding.

According to another aspect of the invention a sanitary fitting is provided which is produced by any of the above-mentioned production methods, wherein the sanitary fitting comprises a base portion and a spout portion having respective average extension directions which enclose an angle between 75° and 105°, in particular about 90°.

Such a sanitary fitting may provide a more preferable design. In particular, the base portion and the spout portion do not have to intersect under an acute angle, which is typically less than about 70° in known plastic injection moulded sanitary fittings.

Furthermore, the present invention is particularly important for sanitary fittings with a closed top, such as automatically activated sanitary fittings. In contrast, sanitary fittings with a handle projecting out of the top comprise an additional opening at the top of the housing where the handle is inserted. This allows to be more flexible with pin inserts of the moulding die and therefore the inventive production method is not necessarily needed for such sanitary fittings.

### BRIEF DESCRIPTION OF THE DRAWINGS

Various features and advantages of the present invention may be more readily understood with reference to the following detailed description taken in conjunction with the accompanying drawings in which:
- Figure 1: shows cut view of a valve cartridge for a sanitary fitting produced by the method according to the invention;
- Figure 2: shows a perspective exploded view of the three main components according to the invention, namely an actuating lever, a toggle joint element and a lever support part forming a toggle joint;
- Figure 3: a section view through a moulding die used to produce the sanitary fitting;
Figures 4a-4e a sequence of perspective views of the moulding process.

### DETAILED DESCRIPTION OF PREFERRED EMBODIMENTS

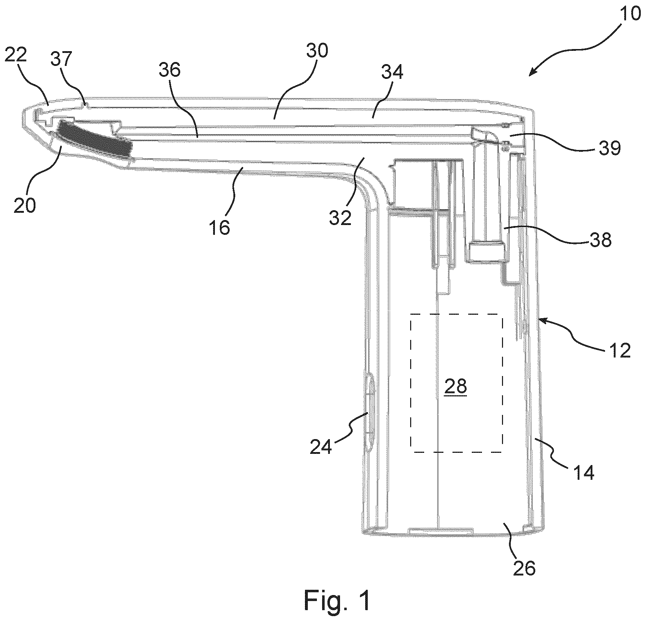

Fig. 1 shows a sanitary fitting 10, in particular an automatically activated valve fitting. The sanitary fitting 10 comprises a housing 12 and is shown without the details of inner valve components, because the present invention mainly focuses on the production of the housing 12.

The housing 12 comprises a base portion 14 and a spout portion 16. The base portion 14 shows an overall upright alignment wherein the spout portion 16 project approximately orthogonal from an upper end 18 of the base portion 14.

A spout opening 20 is arranged at a distal end 22 of the spout portion 16. The spout opening 20 faces downwards with an inclination away from the sanitary fitting 10 to direct an ejecting water flow slightly to the front.

The base portion 14 comprises a sensor window 24 pointing towards the front in which a proximity sensor of an automatic activation circuit is arranged.

Furthermore, the base portion 14 comprises a stand opening 26 through which water connection lines (not shown) enter the sanitary fitting. The base portion 14 encloses a valve space 28 where the inner valve components like e.g. a valve cartridge are arranged.

The details of the design may vary depending on the overall design of the sanitary fitting 10.

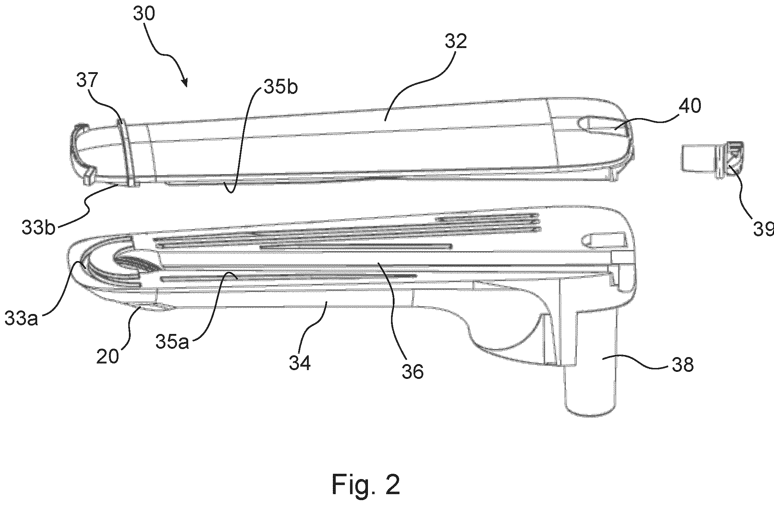

In order to direct water from the water connection lines entering through the stand opening 26 to the spout opening 20 a water passage is required. To this purpose, the present sanitary fitting 10 comprises a water channel insert 30 arranged mainly within the spout portion 16 and on top of the valve space 28. The details of the water channel insert 30 are shown in Fig. 2.

In the present embodiment the water channel insert 30 comprises two main parts, a cover part 32 and a base part 34.

The construction of the water channel insert 30 is as follows:
First, the base part 34 is moulded, wherein a water channel 36 running from the proximal end of the water channel insert 30 towards the spout opening 20 at the distal end is provided in the base part 34.

Near the proximal end of the water channel insert 30, the water channel 36 makes a turn downwards into an outlet connection sleeve 38. The outlet connection sleeve 38 will later receive a connection line (not shown) from the inner valve components to feed water into the water channel 36.

Furthermore, the base part 34 comprises fixation structures like grooves 33a, 35a.

In a second step, the base part 34 is placed in a moulding form for the water channel insert 30 and is then over-moulded with the cover part 32. Because the liquified mould flows into the grooves 33a, 35a, complementary fixation structures like rips 33b, 35b are produced within the grooves 33a, 35a.

As can be seen in Fig. 2 the water channel 36 is a half open channel in the base part 34 which is fully closed when the cover part 32 is mounted. To keep the water channel 36 of the water channel insert 30 open during the over-moulding step, a channel pin insert is placed within the water channel 36. This channel pin insert will be retracted from the proximal end of the water channel insert 30 when the water channel insert 30 is released from its moulding form (in Fig. 2 to the right). The resulting opening towards the outside of the water channel insert 30 right at the turn of the water channel 36 is then closed with a plug 39.

The above construction method for the water channel insert 30 results in a combined leak tight component. However, the water channel insert 30 may equally well be constructed as monobloc component.

From Fig. 2 it can be seen that the water channel 36 extends not centrally along the water channel insert 30, but under a slight angle such that the outlet connection sleeve 38 is arranged off-centric. This arrangement leaves space for a through hole 40 provided in the water channel insert 30. The purpose of the through hole 40 will be become clear in the following explanation of the manufacturing method for the sanitary fitting 10, in particular for the housing 12.

Furthermore, the water channel insert 30 comprises flow control rips 37 projecting outwards from its outer surface. Again, the purpose of these flow control rips 37 will be explained later.

Coming to the production method for the sanitary fitting 10 itself, respectively the housing 12, the production method is a plastic injection moulding process, wherein a plastic material like e.g. ABS for outer parts, PPS, PPO, PSU or PPSU for inner parts is used. ABS is particularly useful because it can be chrome plated. The plastic injection moulding process is generally using higher pressures in the order of 100 to 2000 bar in contrast to brass casting which works with lower pressures in the order of only a few bar.

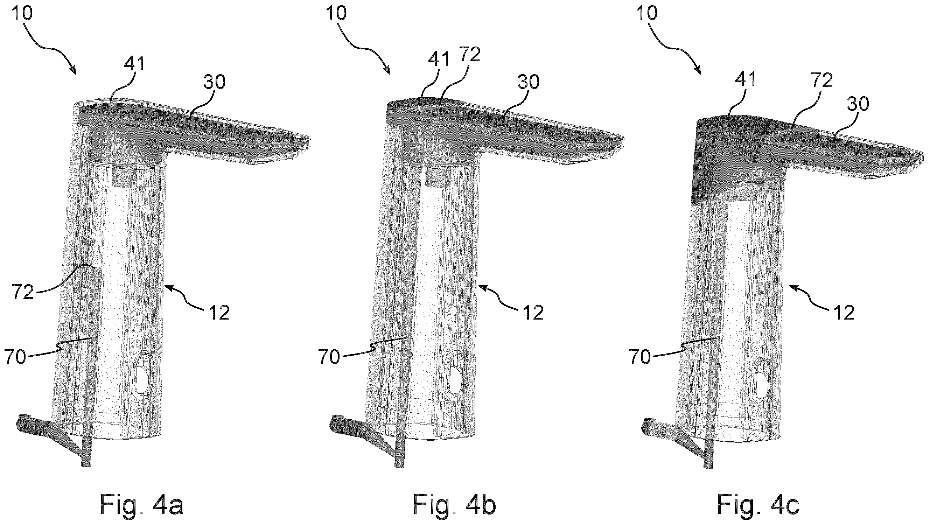

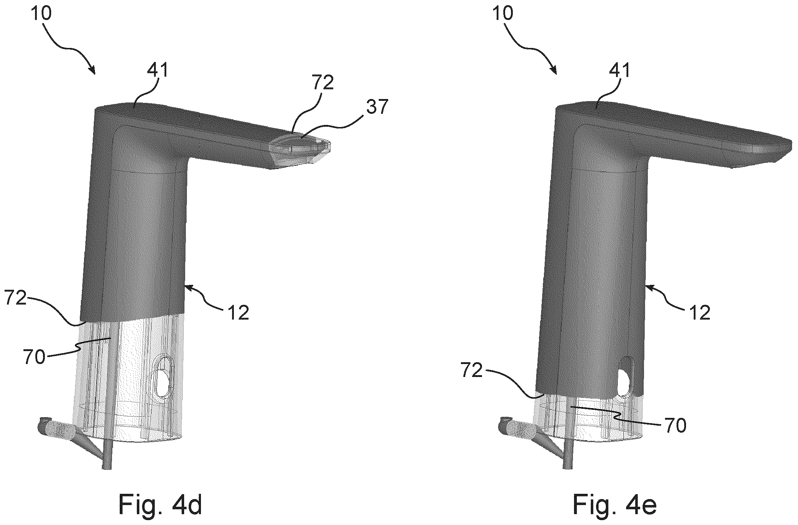

Fig. 4 shows a moulding die 50 which is used to injection mould the housing 12 of the sanitary fitting 10.

The moulding die 50 comprises several moulding die shell parts 52a-d which define an outer shape of a mould cavity 54. Some of the die shell parts 52a-d may be movable in order to eject the housing 12 after the moulding process. Generally, the individual components of the moulding die 50 all have their particular movement paths or given positions during the moulding process and are driven by drive systems which are not shown but are well known in the state of the art. Furthermore, it is clear to someone skilled in the art that only the relative movement of the components to each other is of importance and therefore the same component may be provided stationary or movable depending on the overall ejection concept of the moulding die 50.

Furthermore, the moulding die 50 also includes cooling lines and heaters to perfectly set the conditions inside the mould cavity during the injection step and during cool down. However, such techniques are also well known and not particularly important for the present invention.

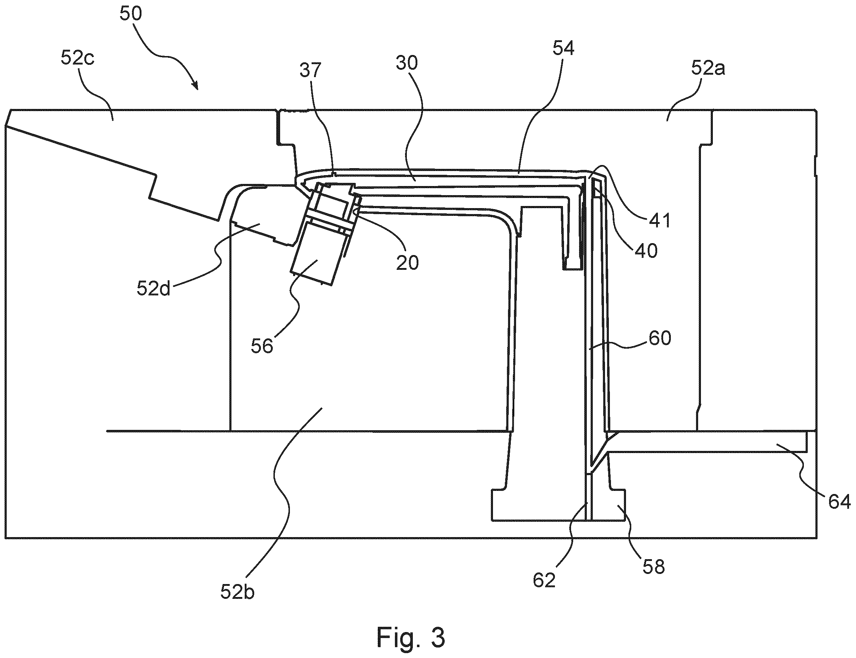

Fig. 3 shows the water channel insert 30 placed inside the mould cavity 54 respectively the water channel insert 30 defines the inner surface of the mould cavity 54 inside the spout portion 16 of the housing 12.

The moulding die 50 comprises a spout pin insert 56 which penetrates through the mould cavity 54. This spout pin insert 56 defines the spout opening 20 within the mould cavity 54 and is retractable once the moulding process is finished.

To define the inner surface of the base portion 14 of the housing 12, the moulding die 50 comprises a base pin insert 58. The base pin insert 58 is retractable from the inside of the base portion 14 (to the bottom in Fig. 3). The base pin insert 58 therefore is also often called a moving core.

Furthermore, the base pin insert 58 comprises an injection channel 60. The injection channel 60 extends through the base pin insert 58 towards the through hole 40 in the water channel insert 30. At its feeding end, the injection channel 60 is connected to a material supply channel 64 of the moulding die 50.

Finally, the moulding die 50 comprises an ejector piston 62 which moves inside the injection channel 60.

The moulding process for the manufacturing of the sanitary fitting works as follows:
When the moulding die 50 is open, the water channel insert 30 gets placed inside the mould cavity 54. Then the moulding die 50 is closed.

The spout pin insert 56 and the base pin insert 58 get arranged at their respective positions where they define the spout opening 20, the stand opening 26 and the valve space 28.

Liquified mould 70 is then injected via the material supply channel 64 into the moulding die 50.

As can be seen in Fig. 4a, a mould front 72 of the mould 70 first propagates along the injection channel 60. The mould 70 then reaches the through hole 40 of the water channel insert 30 and exits on the other side of the water channel insert 30 into the mould cavity 54. The mould front 72 then distributes away from this injection point 41, namely at the through hole 40, into the mould cavity 54 (compare Figs. 4b and 4c)

At this point of the injection moulding process, the mould 70, which is injected under high pressures, presses the water channel insert 30 towards the base pin insert 58 and the spout pin insert 56. This stabilizes the water channel insert 30 inside the mould cavity 54.

In other words, the pressure force of the mould 70 which is injected on the opposite side of the water channel insert 30 with respect to the supporting base and spout pin inserts 56, 58 is used to upkeep a defined mould cavity 54 during injection.

When the mould front 72 reaches the flow control rips 37 at the distal end 22 of the spout portion 16 (compare Fig. 4d), the mould 70 gets slowed down and/or redirected by the flow control rips 37 such that the distal end 22 of the spout portion 16 is optimally filled with the mould 70.

Finally, Fig. 4e shows the end of the injection moulding process, where the mould front 72 nearly reaches the end of the base portion 14.

In a next phase, the moulding die 50 is cooled down in the usual way to solidify the mould 70.

In a next phase, the moulding die 50 is opened to release the sanitary fitting 10. In this phase the ejector piston 62 enters into the injection channel 60 to push out the now solidified mould 70 from the injection channel 60. The resulting material stick crossing the valve space 28 inside the sanitary fitting 10 can be broken off in a subsequent postprocessing step.

The resulting sanitary fitting 10 may then be coated with chrome to achieve a housing 12 with a shiny surface as known from usual sanitary fittings. The fact that the injection point during the injection moulding process was on the inside of the mould cavity 54 guarantees a perfectly smooth surface. No further postprocessing steps to flatten away a gating point on the outside surface of the sanitary fitting 10, e.g. by grinding, are needed.

## Claims

1. A production method for a sanitary fitting (10) including the following steps:
a) Providing a moulding die (50) for injection moulding of the sanitary fitting (10) which defines a mould cavity (54);
b) Arranging a die insert (30), which is configured to be lost within the sanitary fitting (10), in the mould cavity (54);
c) Arranging at least one support insert (56; 58) to support the die insert (30) within the mould cavity (54); spaced apart from moulding die components defining the outer surface of the sanitary fitting (10);
d) Providing an injection point (41) on the other side of the die insert (30) with respect to the at least one support insert (56; 58);
e) Injecting mould (70) at the injection point (41) such that the die insert (30) is stabilized within the mould cavity (54) between the at least one support insert (56, 58) and the injected mould (70) by the pressure force of the injected mould (70).

2. The production method according to claim 1, wherein
a) for providing the injection point (41) an injection channel (60) is provided which traverses the die insert (30) such that it reaches the mould cavity (54) on the other side of the die insert (30) with respect to the at least one support insert (56; 58) at an injection opening (40) arranged at the die insert (30) and wherein
b) the mould (70) is injected through the injection channel (60) and out of the injection opening (40) into the mould cavity (54) behind the die insert (30).

3. The production method according any of the preceding claims, wherein the die insert (30) is a water channel insert (30) comprising at least one water channel (36).

4. The production method according to claim 3, wherein the water channel insert (30) is comprises two parts (32, 34), in particular a base part (34) and a cover part (32), and wherein the water channel insert (30) is produced in an over-moulding step by over-moulding one of the parts (34) with the other part (32).

5. The production method according to claim 4, wherein during the over-moulding step the water channel (36) is kept free of mould using a water channel pin and a resulting opening to an outside of the water channel insert (30) is closed with a plug (39).

6. The production method according any of the preceding claims, wherein the at least one support insert (56; 58) comprises a base pin insert (56) which is arranged inside a base portion (14) of the sanitary fitting (10).

7. The production method according any of the preceding claims, wherein the at least one support insert (56; 58) comprises a spout pin insert (58) which is arranged inside a spout portion (16) of the sanitary fitting (10).

8. The production method according any of the preceding claims, wherein at least part of the injection channel (60) is extending through the at least one support insert (56, 58).

9. The production method according any of the preceding claims, wherein the mould (70) is a plastics material.

10. A sanitary fitting (10) produced by a production method according to any of the preceding claims, wherein the sanitary fitting comprises a base portion and a spout portion having respective average extension directions which enclose an angle between approximately 70° and 130°, in particular between 80° and 100°, preferably about 90°.
